## Europäisches Patentamt
## European Patent Office
## Office européen des brevets

(19)

(11) Numéro de publication: **0 116 500 B1**

(12) **FASCICULE DE BREVET EUROPEEN**

(45) Date de publication du fascicule du brevet:
**27.08.86**

(51) Int. Cl.⁴: **F 16 K 27/00**, F 15 B 13/08, F 15 B 11/05

(21) Numéro de dépôt: 84400193.3

(22) Date de dépôt: **27.01.84**

(54) **Perfectionnements apportés aux distributeurs de fluide.**

(30) Priorité: 27.01.83 FR 8301248

(43) Date de publication de la demande:
**22.08.84 Bulletin 84/34**

(45) Mention de la délivrance du brevet:
**27.08.86 Bulletin 86/35**

(84) Etats contractants désignés:
**AT BE CH DE GB IT LI NL SE**

(56) Documents cités:
FR - A - 1 541 388
FR - A - 2 253 934
FR - A - 2 330 935
US - A - 3 910 311
US - A - 4 361 169

(73) Titulaire: **REXROTH-SIGMA, 91 boulevard Irène-Joliot-Curie, F-69634 Vénissieux Cedex (FR)**

(72) Inventeur: **Constantinian, Krikor, 35, rue de la Pagère, F-69500 Bron (FR)**

(74) Mandataire: **Gorree, Jean-Michel et al, Cabinet Plasseraud 84, rue d'Amsterdam, F-75009 Paris (FR)**

## Description

L'invention est relative à un distributeur de fluide sous pression, notamment hydraulique, du genre de ceux qui sont destinés à être empilés contre d'autres distributeurs semplables et qui comprend un corps de distributeur, dans lequel peut coulisser un tiroir, ce corps comportant un canal transversale s'étendant d'une face du corps de distributeur, destinée à servir d'appui dans l'empilage, à une autre face parallèle, ce canal transversal étant destinée à être combiné avec au moins un sélecteur de pression afin de transmettre, en aval, la plus forte de deux pressions constituées respectivement par la pression en amont du canal et une pression de travail du distributeur, le corps de distributeur comportant sur sa face destinée à être tournée vers l'amont, un logement amont relié par un conduit à une zone du distributeur où s'établit la pression de travail, l'extrémité de ce conduit débouchant dans le logement amont et étant munie d'un siège pour un organe de fermeture, ce logement amont étant en outre relié latéralement au susdit canal (par exemple US-A-4 361 169).

L'invention a pour but, surout de rendre les distributeurs de fluide du genre défini précédemment tels qu'il soient d'une réalisation plus simple et plus faible notamment en ce qui concerne la formation du sélecteur de pression, et son incorporation dans le distributeur.

Selon l'invention, un distributeur de fluide sous pression, notamment hydraulique, du genre en question est caractérisé par le fait que le corps de distributeur comporte, sur son autre face, destinée à être tournée vers l'aval, un logement aval communiquant avec le canal transversal, l'extrémité du canal qui s'ouvre dans ce logement étant agencée sous la forme d'un siège pour un autre organe de fermeture, l'ensemble étant tel que, dans un empilage, le logement amont d'un distributeur aval vienne en face du logement aval du distributeur amont adjacent, la réunion de ces deux logements avec emprisonnement d'un organe de fermeture dans la chambre constituée par ces deux logements, assurant la formation du sélecteur de pression; avantageusement l'axe du logement aval du distributeur amont est aligné avec l'axe du logement amont du distributeur aval.

De préférence, le logement amont et le logement aval d'un même corps de distributeur sont formés par des trous à axes parallèles qui sont inclinés par rapaport à une direction perpendiculaire aux faces d'appui du corps de distributeur.

Ces logements peuvent avoir une forme tronconique dont la section diminue progressivement en direction du siège de l'organe de fermeture, afin de faciliter la mise en place de cet organe sur le siège.

De préférence, l'axe du logement aval est confondu avec l'axe de la partie du canal débouchant dans ce logement, tandis que l'axe du logement amont est confondu avec l'axe du conduit débouchant dans ce logement.

L'organe de fermeture peut être constitué par une aiguille cylindrique, dont les bouts sont arrondis pour s'appliquer de manière étanche contre les sièges, cette aiguille étant logée sensiblement par mobilé dans l'un et l'autre corps de deux distributeurs empilés.

L'invention consiste, mises à part les dispositions exposées ci-dessus, en certaines autres dispositions dont il sera plus explicitement question ci-après à propos d'un mode de réalisation particulier décrit en détail avec référence au dessin annexé, mais qui n'est nullement limitatif.

La figure 1 de ce dessin, est une coupe transversale, avec parties en extérieur, de deux distributeurs de fluide sous pression, conformés à l'invention, empilés;

La figure 2, enfin, est une coupe longitudinale, avec partie en extérieur, d'un des distributeurs, suivant II-II figure 1.

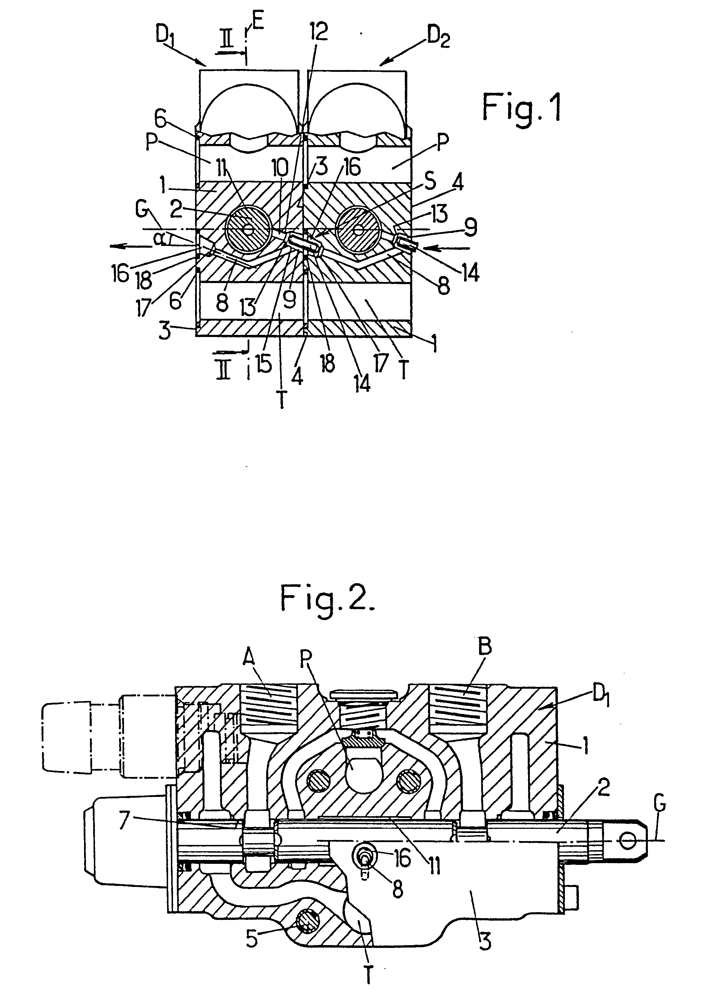

En se reportant à la figure 1, on peut voir un empilage de deux distributeurs de fluide hydraulique sous pression D1, D2. Ces deux distributeurs sont identiques et la description qui suit concernera essentiellement le distributeur D1, situé sur la gauche de la figure 1, et représenté sur la figure 2. Il est clair que toutes les ecxplications données pour D1 sont valables pour D2. Les références numériques utilisées pour D1 sont répétées, sans autres explications, pour désigner des éléments semblables sur D2.

Chaque distributeur tel que D1 comporte un corps de distributeur 1 dans lequel peut coulisser longitudinalement un tiroir 2 établissant d'une manière connue en soi, suivant les positions qu'il occupe, les connexions souhaitées entre deux orifices A et B de branchement sur un appareil utilisateur et, respectivement une entrée P de fluide sous pression et une sortie T vers un réservoir de liquide à la pression atmosphérique. Le corps 1 de distributeur a sensiblement la forme d'un parallélépipède rectangle présentant deux faces transversales 23, 4, parallèles destinées à servir d'appui lors de la formation d'un empilage. Le corps 1 est traversé par des trous lisses tels que 5 (fig. 2) permettant à l'aide de boulons ou de tiges filetées de serrer les corps 1 les uns contre les autres dans l'empilage.

Comme visible sur la figure 1, l'entrée P de pression et la sortie T vers le réservoir comprennent des passages cylindriques qui s'alignent de manière étache grâce à des joints tels que 6 lors de l'empilage des corps 1. L'entrée P et la sortie T sont reliées par des canaux prévus dans le corps de distributeur 1, comme visible sur la figure 2, à des chambres annulaires entourant le tiroir 2 monté dans un alésage 7 du corps 1.

Un canal transversal 8 (fig. 1) est prévu, notamment en forme de V constitué par deux perçages inclinés par rapport à une direction perpendiculaire aux faces 3 et 4 et symétriques par rapport au plan longitudinal moyen E du corps de distributeur. Ce canal 8 s'étend de la face d'appui 3 à l'autre face d'appui 4 en contournant l'alésage longitudinal 7, et est destiné à être combiné avec au moins un sélecteur de pression S afin de transmettre, en aval, c'est-à-dire vers la gauche selon la représentation de la figure 1, la plus forte de deux pressions constituées respectivement par la pression en amont du canal 8 et une pression de travail du distributeur D1.

Le corps 1 de distributeur comporte, sur sa face 4 destinée à être tournée vers l'amont, un logement amont 9 relié par un conduit 10 à une zone 11 du distributeur où s'établit la pression de travail. Cette zone 11, dans le mode de réalisation représenté sur le dessin, est formée par une chambre annulaire ménagée dans le corps de distributeur et entourant la partie centrale du tiroir 2. Un autre sélecteur de pression (non représenté sur le dessin) est avantageusement prévu pour faire régner, dans la zone 11, la plus forte des deux pressions sur les orifices A et B. L'extrémité 12 du conduit 10 débouchant dans le logement amont 9 suivant la direction axiale du conduit 10, est munie d'un siège 13 pour un organe de fermeture formé par une aiguille cylindrique 14 à bouts arrondis, propre à s'appliquer de manière étanche contre un siège tel quel 13. L'organe de fermeture pourrait, éventuellement, être réalisé d'une autre manière, par exemple sous forme d'une bille. Le conduit 10 est rectiligne et coaxial au logement 9; ce conduit 10 est incliné par rapport au plan G passant par l'axe de l'alésage 7 et perpendiculaire à la face 4.

Le logement amont 9 est, en outre, relié latéralement, au conduit 8, c'est-à-dire que le conduit 8 débouche dans une zone 15 de la paroi latérale du logement 9.

Le corps 1 de distributeur comporte, sur son autre face 3, destinée à être tournée vers l'aval, un logement aval 16 communiquant axialement avec le canal transversal 8. L'extrémité de ce canal s'ouvrant dans le logement 16 est agencée sous la forme d'un siège 17 pour un autre organe de fermeture, non représenté, mais qui serait également constitué par une aiguille 14.

L'ensemble est tel que dans un empilage, par exemple celui formé par les distributeurs D1, D2, le logement amont 9 du distributeur aval D1 vienne en face du logement aval 16 du distributeur amont D2 adjacent les axes des logements 9 et 16 étant alignés. La réunion de ces deux logements 9, 16 avec emprisonnement de l'organe de fermeture formé par l'aiguille 14 assure la formation du sélecteur S, chaque logement 9, 16 correspondant sensiblement à une moitié du sélecteur. L'aiguille 14 est logée sensiblement par moitié dans l'un et l'autre corps du distributeur. Si la pression en amont du canal 8 du distributeur D1 (c'est-à-dire la pression dans le canal 8 du distributeur D2 situé en amont) est supérieure à la pression de travail de D1 régnant dans le conduit 10, l'aiguille 14 vient s'appliquer contre le siège 13 et fermer ce conduit, de telle sorte que la pression dans le canal 8 du distributeur amont D2 est transmise, vers l'aval, dans le canal 8 du distributeur D1.

Par contre, si la pression dans le conduit 10 de D1 est supérieure à celle régnant dans le canal 8 du distributeur amont D2, l'auguille 14 vient s'appliquer contre le siège 17 de D2.

L'étanchéité de la réunion des logements 9 et 16 de deux distributeurs adjacents est assurée grâce à une bague d'étanchéité telle que 18 montée dans un évidement annulaire entourant l'extrémité du logement 16 débouchant sur la face 3.

Le logement amont 9 et le logement aval 16 d'un même distributeur D1 sont avantageusement formés par des trous à axes parallèles qui sont inclinés d'un angle α par rappaort à la direction perpendiculaire aux faces d'appui 3 et 4. Les logements 9 et 16 ont, de préférence une forme tronconique dont la section transversale diminue en direction du siège 13, 17 de l'aiguille 14 pour faciliter la mise en place de cette dernière sur le siège.

Le distributeur conforme à l'invention est d'une réalisation simple et permet de réaliser rapidement, lors de l'empilage les sélecteurs S.

## Revendications

1. Distributeur de fluide sous pression, notamment hydraulique, destiné à être empilé contre d'autres distributeurs semblables, comprenant un corps de distributeur (1) dans lequel peut coulisser un tiroir (2), ce corps comportant un canal transversal (8) s'étendant d'une face du corps de distributeur (1), destinée à servier d'appui dans l'empilage, à une autre face parallèle, ce canal transversal (8) étant destiné à être combiné avec au moins un sélecteur de pression (S) afin de transmettre, en aval, la plus forte de deux pressions constituées respectivement par la pression en amont du canal (8) et une pression de travail du distributeur, le corps de distributeur (1) comportant sur sa face (4) destinée à être tournée vers l'amont, un logement amont (9) relié par un conduit (10) à une zone (11) du distributeur où s'établit la pression de travail, l'extrémité de ce conduit (10) débouchant dans le logement amont (9) et étant munie d'un siège (13) pour un organe de fermeture (14), ce logement amont (9) étant, en outre, relié latéralement au susdit canal (8), caractérisé par le fait que le corps (1) de distributeur comporte, sur son autre face (3) destinée à être tournée vers l'aval, un logement aval (16) communiquant avec le canal transversal (8), l'extrémité du canal qui s'ouvre dans ce logement étant agencée sous la forme d'un siège (17) pour un autre organe de fermeture (14), l'ensemble étant tel que, dans un empilage, le logement amont (9) d'un distributeur aval (D1) vienne en face du logement aval (16) du distributeur amont (D2) adjacent, la réunion de ces deux logements (9, 16) avec emprisonnement d'un organe de fermeture (14) dans la chambre constituée par ces deux logements, assurant la formation du sélecteur de pression (S).

2. Distributeur selon la revendication 1, caractérisé par le fait qu'il est agencé de telle sorte que dans un empilage l'axe du logement aval (16) du distributeur (D2) amont soit aligné avec l'axe du logement amont (9) du distributeur (D2) aval.

3. Distributeur selon la revendication 1 ou 2, caractérisé par le fait que le logement amont (9) et le logement aval (16) d'un même corps (1) de distributeur sont formés par des trous à axes parallèles qui sont inclinés par rapport à une direction perpendiculaire aux faces d'appui (3, 4) du corps de distributeur.

4. Distributeur selon l'une quelconque des revendications 1 à 3, caractérisé par le fait que les logements (9, 16) ont une forme tronconique dont la section diminue progressivement en direction du siège (13, 17) de l'organe de fermeture (14) afin de faciliter la mise en place de cet organe sur le siège.

5. Distributeur selon l'une quelconque des revendications précédentes, caractérisé par le fait que l'axe du logement aval (16) est confondu avec l'axe de la partie du canal (8) débouchant dans ce logement.

6. Distributeur selon l'une quelconque des revendications précédentes, caractérisé par le fait que l'axe du logement amont (9) est confondu avec l'axe du conduit (10) débouchant dans ce logement.

7. Distributeur selon l'une quelconque des revendications précédentes, caractérisé par le fait que le conduit (10) débouche, du côté opposé au logement amont (9) dans une chambre annulaire (11) entourant le tiroir (2) du distributeur.

8. Distributeur selon l'une quelconque des revendications précédentes, caractérisé par le fait que l'organe de fermeture est constitué par une aiguille cylindrique (14) dont les bouts sont arrondis pour s'appliquer de manière étanche contre les sièges (13, 17), cette aiguille étant logée sensiblement par moitié dans l'un et l'autre corps des distributeurs (D1, D2).

## Patentansprüche

1. Fluidverteiler für fluides Druckmedium, insbesondere für Hydraulikflüssigkeit, der dazu bestimmt ist, zusammen mit gleichartigen anderen Fluidverteilern zu einem Stapel zusammengebaut zu werden, umfassend einen Verteilkörper (1), in welchem ein Schieber (2) verschiebbar gelagert ist, wobei dieser Körper einen Querkanal (8) enthält, der sich von einer, als Abstützfläche bei der Stapelung dienenden Stirnfläche zu einer dazu parallelen Stirnfläche erstreckt und dazu bestimmt ist, um mit wenigstens einem Druckselektor (S) kombiniert zu werden, um stromabwärts den stärkeren von zwei Drücken zu übertragen, die durch den Druckstrom aufwärts vom Kanal (8) und einen Arbeitsdruck des Verteilers gebildet sind, wobei der Verteilkörper (1) auf seiner jeweils stromaufwärts anzuordnenden Stirnfläche (4) eine stromaufwärtige Kammer (9) enthält, die durch eine Leitung (10) mit einer Zone (11) des Verteilers verbunden ist, in der sich der Arbeitsdruck ausbildet, wobei das Ende der Leitung (10) in die stromaufwärtige darüber hinaus seitlich mit dem Kanal (8) verbundene Kammer (9) einmündet und mit einem Sitz (13) für ein Schliessorgan (14) versehen ist, dadurch gekennzeichnet, dass das Verteilergehäuse (1) auf seiner stromabwärts anzuordnenden Seitenfläche (3) eine stromabwärtige Kammer (16) enthält, die mit dem Querkanal (8) kommuniziert, dessen sich in diese Kammer öffnendes Ende als Sitz (17) für ein weiteres Schliessorgan (14) ausgebildet ist, und dass die Ausbildung so getroffen ist, dass in einer Stapelung mehrerer Verteiler die stromaufwärtige Kammer (9) eines stromabwärtigen Fluidverteilers (16) der stromabwärtigen Kammer (16) des stromaufwärtigen Verteilers (D2) gegenüberliegt, so dass die Vereinigung der beiden Kammern (9, 16) unter Einschliessung eines Schliessorgans (14) in der durch die beiden Kammern gebildeten Gesamtkammer die Bildung eines Druckselektors (S) sichert.

2. Verteiler nach Anspruch 1, dadurch gekennzeichnet, dass bei einer Stapelung mehrerer Verteiler die Achse der stromabwärtigen Kammer (16) des stromaufwärtigen Verteilers (D2) mit der Achse der stromaufwärtigen Kammer (9) des stromabwärtigen Verteilers (D1) fluchtet.

3. Verteiler nach Anspruch 1 oder 2, dadurch gekennzeichnet, dass die stromaufwärtige Kammer (9) und die stromabwärtige Kammer (16) gleichen Verteilergehäuses (1) Bohrungen mit zueinander parallelen, zur Vertikalen auf die Stirnflächen (3, 4) geneigten Achsen sind.

4. Verteiler nach einem der Ansprüche 1 bis 3, dadurch gekennzeichnet, dass die Kammern (9, 16) kegelstumpfförmig ausgebildet sind, wobei sich der Querschnitt zunehmend in Richtung des Sitzes (13, 17) des Schliessorgans (14) vermindert, um das Einbringen dieses Organs auf den Sitz zu erleichtern.

5. Verteiler nach einem der Ansprüche 1 bis 4, dadurch gekennzeichnet, dass die Achse der stromabwärtigen Kammer (16) mit der Achse des in diese Kammer einmündenden Abschnitts des Kanals (8) zusammenfällt.

6. Verteiler nach einem der Ansprüche 1 bis 5, dadurch gekennzeichnet, dass die Achse der stromaufwärtigen Kammer (9) mit der Achse der in diese Kammer einmündenden Leitung (10) zusammenfällt.

7. Verteiler nach einem der Ansprüche 1 bis 6, dadurch gekennzeichnet, dass die Leitung (10) auf der der stromaufwärtigen Kammer (9) entgegengesetzten Seite in eine den Schieber (2) des Verteilers umgebende Ringkammer (11) einmündet.

8. Verteiler nach einem der Ansprüche 1 bis 7, dadurch gekennzeichnet, dass das Schliessorgan eine zylindrische Nadel (14) ist, deren Enden abgerundet sind, damit sie sich dichtend gegen die Sitze (13, 17) anlegen können, wobei diese Nadel im wesentlichen hälftig in den beiden zusammenstossenden Verteilergehäusen (D1, D2) angeordnet ist.

## Claims

1. A pressurized, more especially hydraulic, fluid distributor intended to be stacked against other similar distributors, comprising a distributor body (1) in which a slide-valve (2) may slide, this body comprising a transverse channel (8) extending from one face of the distributor body (1), intended to serve as a bearing surface in the stack, to another parallel face, this transverse channel (8) being intended to be combined with at least one pressure selector (S) so as to transmit downstream the highest of the pressures formed respectively by the pressure upstream of the channel (8) and a working pressure of the distributor, the distributor body (1) comprising, on its face (4) intended to be turned upstream, an upstream housing (9) connected by a duct (10) to a zone (11) of the distributor where the working pressure is established, the end of this duct (10) opening into the upstream housing (9) and being provided with a seat (13) for a closure member (14), this upstream housing (9) being further connected laterally to said channel (8), characterized by the fact that the distributor body (1) comprises, on its other face (3) intended to be turned downstream, a downstream housing (16) communicating with the transverse channel (8), the end of the channel which opens into this housing being adapted in the form of a seat (17) for another closure member (14), the assembly being such that, in a stack, the upstream housing (9) of a downstream distributor (D1) is located in front of the downstream housing (16) of the adjacent upstream distributor (D2), the junction of these two housings (9,16) with imprisonment of a closure member (14) in the chamber formed by these two housings ensuring the formation of the pressure selector (S).

2. The distributor according to claim 1, characterized by the fact that it is adapted so that, in a stack, the axis of the downstream housing (16) of the upstream distributor (D2) is aligned with the axis of the upstream housing (9) of the downstream distributor (D1).

3. The distributor according to claim 1 or 2, characterized by the fact that the upstream housing (9) and the downstream housing (16) of the same distributor body (1) are formed by holes with parallel axes which are slanting with respect to a direction perpendicular to the bearing faces (3, 4) of the distributor body.

4. The distributor according to any one of claims 1 to 3, characterized by the fact that the housings (9, 16) have the shape of a truncated cone whose section decreases progressively in the direction of the seat (13, 17) of the closure member (14) so as to facilitate positioning of this member on the seat.

5. The distributor according to any one of the preceding claims, characterized by the fact that the axis of the downstream housing (16) merges with the axis of the part of the channel (8) opening into this housing.

6. The distributor according to any one of the preceding claims, characterized by the fact that the axis of the upstream housing (9) merges with the axis of the duct (10) opening into this housing.

7. The distributor according to any one of the preceding claims, characterized by the fact that the duct (10) opens, on the side opposite the upstream housing (9), into an annular chamber (11) surrounding the slide-valve (2) of the distributor.

8. The distributor according to any one of the preceding claims, characterized by the fact that the closure member is formed by a cylindrical needle (14) whose ends are round so as to be sealingly applied against the seat (13,17), this needle being housed substantially half in the one and half in the other body of the distributors (D1, D2).

Fig.1

Fig.2.